(19) **Europäisches Patentamt / European Patent Office / Office européen des brevets**

(11) **EP 3 792 124 B1**

(12) # FASCICULE DE BREVET EUROPEEN

(45) Date de publication et mention de la délivrance du brevet:
**03.12.2025 Bulletin 2025/49**

(21) Numéro de dépôt: **20194678.7**

(22) Date de dépôt: **04.09.2020**

(51) Classification Internationale des Brevets (IPC):
**B60W 30/06** (2006.01) **B60W 50/00** (2006.01)
**B60W 60/00** (2020.01) **G05D 1/00** (2024.01)
**B62D 15/02** (2006.01)

(52) Classification Coopérative des Brevets (CPC):
**B60W 30/06; B60W 60/0011; B60W 60/0027;**
B60W 2050/0082; B60W 2556/35; B60W 2556/40

(54) **PROCEDE DE CONTROLE D'UN VEHICULE AUTONOME COMPRENANT UNE DISCRETISATION DES DONNEES DE L'ENVIRONNEMENT**

VERFAHREN ZUR STEUERUNG EINES AUTONOMEN FAHRZEUGS, DAS EINE DISKRETISIERUNG DER UMGEBUNGSDATEN BEINHALTET

METHOD FOR CONTROLLING AN AUTONOMOUS VEHICLE INCLUDING DISCRETISATION OF DATA FROM THE ENVIRONMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.09.2019 FR 1910052**

(43) Date de publication de la demande:
**17.03.2021 Bulletin 2021/11**

(73) Titulaire: **Ampere SAS**
**92100 Boulogne-Billancourt (FR)**

(72) Inventeurs:
• **AUBERT, Sébastien**
**06200 Nice (FR)**
• **REZARD, Vincent**
**06140 Vence (FR)**
• **WEINGERTNER, Philippe**
**83440 Fayence (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
**US-A1- 2019 072 965**

• **MAXIM LIKHACHEV ET AL: "Planning Long Dynamically Feasible Maneuvers for Autonomous Vehicles", THE INTERNATIONAL JOURNAL OF ROBOTICS RESEARCH, 1 August 2009 (2009-08-01), London, England, pages 933 - 945, XP055545279, Retrieved from the Internet <URL:https://www.cs.cmu.edu/~maxim/files/planlongdynfeasmotions_rss08.pdf> DOI: 10.1177/0278364909340445**
• **RAMIREZ OMAR A ISLAS ET AL: "Robots learning how and where to approach people", 2016 25TH IEEE INTERNATIONAL SYMPOSIUM ON ROBOT AND HUMAN INTERACTIVE COMMUNICATION (RO-MAN), IEEE, 26 August 2016 (2016-08-26), pages 347 - 353, XP033006194, DOI: 10.1109/ROMAN.2016.7745154**
• **ANMIN ZHU ET AL: "Neurofuzzy-Based Approach to Mobile Robot Navigation in Unknown Environments", IEEE TRANSACTIONS ON SYSTEMS, MAN, AND CYBERNETICS: PART C:APPLICATIONS AND REVIEWS, IEEE SERVICE CENTER, PISCATAWAY, NJ, US, vol. 37, no. 4, 1 July 2007 (2007-07-01), pages 610 - 621, XP011186120, ISSN: 1094-6977, DOI: 10.1109/TSMCC.2007.897499**

- **SAKCAK BASAK ET AL: "Using motion primitives to enforce vehicle motion constraints in sampling-based optimal planners", 2018 IEEE INTERNATIONAL SYMPOSIUM ON CIRCUITS AND SYSTEMS (ISCAS), IEEE, 27 May 2018 (2018-05-27), pages 1 - 5, XP033432079, DOI: 10.1109/ISCAS.2018.8351867**

## Description

### *Domaine technique*

L'invention a pour domaine technique le contrôle de véhicules autonome, et plus particulièrement le contrôle de véhicules automobiles munis de fonctions d'aide à la conduite ou de conduite autonome.

### *Etat de la technique antérieure*

Dans le contexte des systèmes avancés d'assistance à la conduite ADAS (Acronyme anglophone pour « Advanced Driving Assistance Systems ») et des systèmes de conduite autonome AD (Acronyme anglophone pour « Autonomous Driving »), l'évolution sûre, efficace et robuste d'un véhicule dans un trafic réel et dans une topologie réelle est réduit à une stratégie de contrôle optimal. Dans ce but, toutes les méthodes reposent sur une représentation du monde à travers un environnement au voisinage de l'ego, nourrissant des mécanismes capables de calculer des trajectoires adaptées tout en satisfaisant des attentes de fonctionnement dans le monde réel.

Pour cela, une étape préliminaire impérative consiste à transférer des données pertinentes des systèmes de fusion de données de capteurs aux algorithmes de planification. Cette étape impacte dramatiquement les capacités temps réel et les performances.

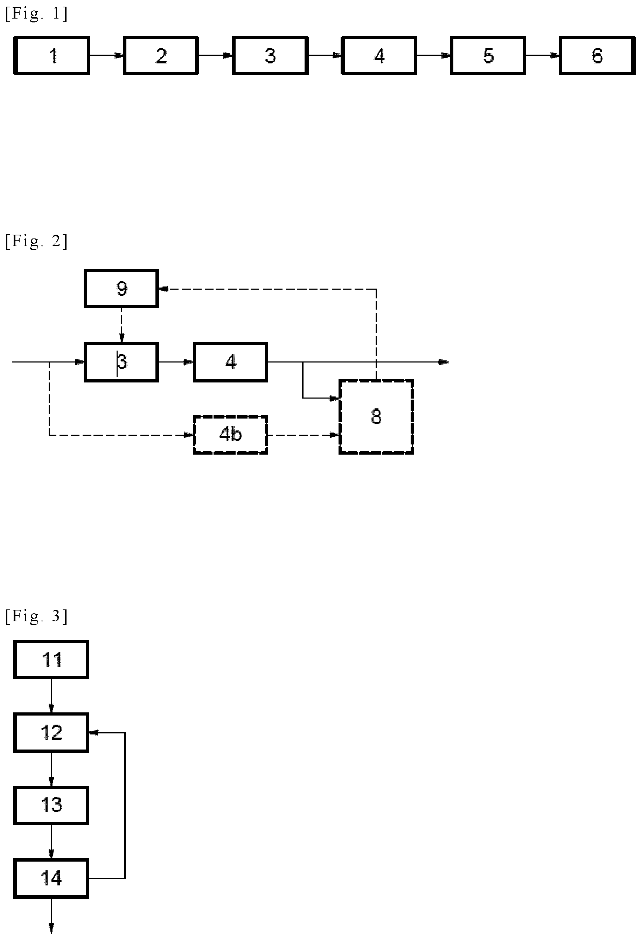

La figure 1 illustre l'architecture théorique du contrôle d'un véhicule autonome. Une étape 1 de perception permet d'acquérir des données des différents capteurs du véhicule (caméra, lidar, gps,...). Une étape 2 de fusion permet de combiner les données acquises pour produire des vecteurs d'état associés à chacun des objets situés autour du véhicule. Un vecteur d'état peut comprendre plusieurs données relatives à l'objet, telles que la vitesse, la position, les dimensions,...Une étape 3 de discrétisation permet de réduire la précision des valeurs des vecteurs d'état afin de réduire la quantité de données à manipuler. Une étape 4 de décision de conduite permet de déterminer le trajet à réaliser en fonction des vecteurs d'état discrétisés disponibles. Une étape 5 de contrôle des règles de sécurité permet de déterminer si le trajet à réaliser est compatible avec les règles de sécurité, par exemple le respect des distances réglementaires avec les objets identifiés comme des véhicules, ou la durée d'activation des différents signaux de changement de voie. Une étape 6 de réalisation transforme le trajet à réaliser en instructions de commande à destination des différents actuateurs.

L'étape 3 de discrétisation est un point clef pour la croissance des capacités du contrôle, avec des implications en termes de complexité et d'impact sur les performances. Dans le cas extrême, l'étape 3 de discrétisation représente une solution irréalisable présentant une haute résolution tendant vers une approche continue du modèle du monde donc sans perte, ou au contraire une perte de performances drastique si des objets pertinents ne sont pas considérés de façon suffisamment précise.

De l'état de la technique antérieure, on connaît le document Likhachev, M., & Ferguson, D. (2009). Planning long dynamically feasible maneuvers for autonomous vehicles. The International Journal of Robotics Research, 28(8), 933-945.

Ce document divulgue une approche multi-résolution, la proximité du robot étant traitée à haute résolution et le reste de l'environnement en basse résolution. Cette discrétisation de l'espace a un effet direct sur les actions possibles. Toutefois, cette problématique n'est pas considérée dans ce document.

Le document US2019/072965A1 décrit quant à lui un système et un procédé basé sur la prédiction pour planifier la trajectoire de véhicules autonomes.

### *Exposé de l'invention*

L'invention a pour objet un procédé de contrôle d'un véhicule autonome selon la revendication 1.

Un objet peut être choisi parmi une infrastructure, un bâtiment, une voie de circulation, un piéton, ou un véhicule, et chaque objet étant statique ou en mouvement.

Un vecteur d'état peut comprendre au moins un parmi la distance de l'objet au véhicule, la vitesse relative de l'objet par rapport au véhicule, le poids, le niveau de confiance, ou une combinaison de plusieurs variables.

La fonction de discrétisation peut être une fonction quadratique.

### *Brève description des dessins*

D'autres buts, caractéristiques et avantages de l'invention apparaîtront à la lecture de la description suivante, donnée uniquement à titre d'exemple non limitatif et faite en référence aux dessins annexés sur lesquels :

- [Fig. 1] illustre l'architecture théorique du contrôle d'un véhicule autonome,
- [Fig. 2] illustre la répartition des fonctions entre moyens online et offline dans le cadre de la mise au point de la méthode de discrétisation,
- [Fig. 3] illustre les principales étapes d'un procédé de contrôle de détermination des paramètres de la fonction de discrétisation basées sur une heuristique et sur un échantillonnage, et
- [Fig. 4] illustre les principales étapes d'un procédé de contrôle de détermination des paramètres de la fonction de discrétisation basées sur une heuristique et sur une mise à jour par gradient d'erreur.

### Description détaillée

Le procédé de contrôle permet d'élaguer graduellement la représentation de l'environnement issue d'un moyen de fusion tout en restant conjointement quasi-optimal.

Soit deux variables aléatoires x,y, on rappelle qu'en mathématique leur valeur optimale à un problème sont définies respectivement par les équations [Math.1] et [Math.2] suivantes :

[Math.1]

$$\hat{x} = \Pr\{x = a\}$$

[Math.2]

$$\hat{y} = \Pr\{y = b\}$$

Leur valeur conjointement optimale $\overline{(xy)}$ est définie par l'équation [Math.3] suivante si x et y sont dépendantes :

[Math.3]

$$\overline{(xy)} = \Pr\{(x, y) = (a, b)\}$$

Leur valeur conjointement optimale $(\hat{x}\hat{y})$ est définie par l'équation [Math.4] suivante si x et y sont indépendantes :

[Math.4]

$$\overline{(xy)} = \hat{x}\hat{y}$$

La représentation incorpore des aspects d'implémentation et en particulier des capacités temps réel et d'empreinte mémoire de l'interface, en se concentrant sur la quantité de bits de représentation qui est quantitativement la plus appropriée.

Dans ce contexte, le procédé de contrôle emploie une méthode multivariables pour discrétiser la représentation objet de telle sorte que le nombre de bits choisi pour chaque représentation assure que le bruit résultant sur la sortie de la fonction de conduite pour l'ego-véhicule est limité par une valeur d'un critère d'erreur.

Pour réaliser ceci, on utilise une simulation la plus précise possible en résolution complète sans perte pour déterminer la sortie de la fonction de conduite, notamment en utilisant un simulateur off-line (hors ligne en français). Par off-line, on comprendra qu'il s'agit d'un équipement qui n'est pas embarqué ou une fonction exécutée sur un équipement qui n'est pas embarqué.

En fonction de la sortie ainsi obtenue, on peut déterminer conjointement un ensemble de paramètres permettant d'utiliser ultérieurement la méthode de discrétisation online. Par online (en ligne en français), on comprendra qu'il s'agit d'un équipement qui est embarqué ou une fonction exécutée sur un équipement embarqué.

La figure 2 illustre la répartition des fonctions entre moyens online et offline dans le cadre de la mise au point de la méthode de discrétisation. Sur la figure 2, on peut voir deux flux qui alimentent deux moyens de détermination appliquant la fonction de conduite.

Un premier moyen de détermination 4b appliquant la fonction de conduite réalise la détermination en résolution complète sans perte.

Un deuxième moyen de détermination 4 appliquant la fonction de conduite réalise la détermination après discrétisation, en se basant sur un jeu de paramètres de réglage $\{a_1, a_2, ..a_n\}$.

Un comparateur 8 détermine l'écart entre la position finale émise par chacun des moyens de détermination appliquant la fonction de conduite et le transmet à un moyen de détermination 9 des paramètres de réglage.

Le jeu de paramètres de réglage déterminé par le moyen de détermination 9 est transmis au moyen de discrétisation 3 qui détermine un environnement (« world-model ») mis à jour à destination du deuxième moyen de détermination 4 appliquant la fonction de conduite. En réalisant plusieurs itérations de ce contrôle en boucle fermée, l'erreur entre les deux moyens de détermination appliquant la fonction de conduite converge de façon quasi-optimale.

Par ailleurs, on peut voir que le premier moyen de détermination 4b appliquant la fonction de conduite, le comparateur 8 et le moyen de détermination 9 des paramètres de réglage sont offline tandis que le deuxième moyen de détermination 4 appliquant la fonction de conduite et le moyen de discrétisation 3 sont online.

Une fois mis au point, le moyen de discrétisation 3 online peut alors être utilisé de façon autonome dans un véhicule en présentant un gain en vitesse de calcul au niveau du moyen de détermination 4 de la fonction de conduite par rapport à celle d'un moyen de détermination 4b offline fonction en données exactes, tout en conservant une pertinence similaire.

La méthode de discrétisation peut être basée sur une heuristique, sur une fonction ou un dispositif, en ayant pour entrées des variables objet et pour sortie des nombres de bits #bits correspondant à chaque variable objet d'entrée.

Une variable objet peut être de différents types, notamment la distance au véhicule égo, la vitesse relative au véhicule égo, le poids, le niveau de confiance, ou une combinaison de plusieurs variables.

L'erreur liée à cette méthode de discrétisation permet de caractériser la qualité de représentation de notre modèle de l'environnement. Cette erreur découle directement du nombre de bits choisis pour représenter chaque valeur relative à un objet.

Généralement, l'erreur réalisée sur la fonction de conduite découle de cette erreur sur la discrétisation.

Afin d'illustrer une telle fonction de discrétisation, on peut définir le nombre de bits utilisés pour représenter les éléments de l'environnement comme une fonction linéaire de la distance de Mahalanobis de ces éléments à partir du véhicule égo. On peut alors s'assurer que la fonction est mise au point en fonction de notre critère de décision lié à l'erreur de discrétisation.

On définit le nombre de bits employés pour représenter les objets de l'environnement en utilisant une heuristique pour explorer l'arbre de toutes les discrétisations possibles de l'environnement. La méthode permet d'élaguer graduellement la représentation de l'environnement obtenue tout en demeurant quasi conjointement optimal.

L'environnement peut être compris comme un monde comprenant le véhicule égo entouré d'objets. Un objet peut être une infrastructure, un bâtiment, une voie de circulation, un piéton, ou un véhicule, et peut être statique ou dynamique, c'est-à-dire en mouvement. Cette liste des objets n'est nullement limitative.

On considère N objets notés $Obj_1$, $Obj_2$, ..., $Obj_n$ dans l'environnement, définis de sorte qu'un objet $Obj_i$ appartient à l'espace des réels $\mathbb{R}^k$ avec k la dimension du vecteur d'état par objet. La fonction de conduite D est une fonction contrôlant la position du véhicule égo en fonction de son environnement d'une position initiale $x_{init}$ à une position finale $x_{final}$ tel que :

$$[Math.5]$$
$$D(x_{init}, Obj_1, Obj_2, Obj_n) = x_{final}$$

Selon la méthode de discrétisation d, chaque objet est représenté par un nombre limité de bits. Le choix du nombre de bits lors de cette discrétisation génère une certaine incertitude $\varepsilon_i$, associée à chaque objet i. Le niveau d'incertitude $\varepsilon_i$ est également appelé bruit de quantification lorsqu'il est dû à un manque de précision de la représentation. Il est à noter que la discrétisation de l'objet $Obj_i$ dépend également des autres objets de la scène du fait de l'approche quasi-optimale jointe du problème.

$$[Math.6]$$
$$d(Obj_i)_{Obj_j, j \in \{1;n\} \, et \, j \neq i} = Obj_i +/- \varepsilon_i$$

L'incertitude $\varepsilon_i$ due à la méthode de discrétisation d et associée à chaque objet $Obj_i$ pris en compte par la fonction de conduite D est source d'une incertitude $\varepsilon_f$ sur la position finale $x_{final}$.

$$[Math.7]$$
$$D(x_{init}, d(Obj_1), d(Obj_2), ..., d(Obj_n)) = x_{final} +/- \varepsilon_f$$

Dans le cadre théorique défini ci-dessus, on formule le problème à résoudre comme la volonté de maintenir l'incertitude sur la position finale $\varepsilon_f$ aussi proche que possible de zéro. Comme une solution associée à une incertitude sur la position finale $\varepsilon_f = 0$ est une solution optimale, on cherche, en d'autres termes, une solution quasi-optimale du point de vue de l'incertitude sur la position finale $\varepsilon_f$ tout en augmentant l'incertitude de position initiale $\varepsilon_i$ en supportant une réduction du nombre de bits #bits_$Obj_i$ de représentation des objets $Obj_i$ de l'environnement.

Il est à souligner que, de l'équation [Math.7], il apparaît que l'incertitude sur la position finale $\varepsilon_f$ est une fonction jointe des incertitudes des positions initiales $\varepsilon_1$ à $\varepsilon_n$ associées respectivement aux objets Obj$_1$ à Obj$_n$. Cela signifie que l'optimum joint étant donné par le N-uplet $(\varepsilon_1,\varepsilon_2,\cdots,\varepsilon_n)$ n'est pas égal à l'union des optimums pour les valeurs $(\varepsilon_1,\varepsilon_2,\cdots,\varepsilon_n)$ considérées indépendamment.

La méthode de discrétisation d doit permettre de s'assurer que la discrétisation retenue pour l'ensemble des objets est quasi-optimale jointe, à savoir telle que l'incertitude sur la position finale $\varepsilon_f$ reste inférieure à un seuil d'erreur admissible.

Sur cette base, la définition de la solution quasi-optimale jointe est la suivante :

[Math.8]
$$\left| D\big(x_{init}, d(Obj_1), d(Obj_2), ..., d(Obj_n)\big) - D(x_{init}, Obj_1, Obj_2, ..., Obj_n) \right| \leq \varepsilon_{max}$$

En d'autres termes, l'écart entre la position finale issue d'un environnement discrétisé $D(x_{init}, d(Obj_1), d(Obj_2), ..., d(Obj_n))$ et la position finale issue d'un environnement représenté sans perte $D(x_{init}, Obj_1, Obj_2, ..., Obj_n)$ est inférieur à un critère d'incertitude maximale $\varepsilon_{max}$ sur la position finale.

Cela implique qu'il existe au moins une solution quasi-optimale jointe autour de l'unique solution optimale jointe. Il apparaît alors qu'il est possible d'obtenir une solution acceptable en relâchant le coût de calcul relatif à l'environnement.

La solution quasi-optimale peut dans des cas très simples être obtenue par des méthodes analytiques. Toutefois, dans la plupart des cas, la solution ne peut être obtenue par de tels moyens. Il est alors nécessaire de disposer d'une méthode de résolution telle que décrite ci-après.

Une première méthode permettant d'obtenir une solution quasi-optimale est basée sur une fonction paramétrique combinée à une heuristique.

Plus précisément, on considère une fonction de discrétisation prédéfinie avec des paramètres a$_1$,a$_2$,...,a$_n$ mise au point par une approche heuristique. Par exemple, on peut utiliser une fonction quadratique pour assigner le nombre de bits à chaque objet Obj$_i$. Le nombre de bits assigné à un objet Obj$_i$ tient compte de l'influence des autres objets de par le fait que la fonction de discrétisation est conjointement quasi-optimale.

[Math.9]
$$d(Obj_i) = a_1(Obj_i)^2 + a_2 \cdot Obj_i + a_3$$

Pour cet exemple, la mise au point porte alors sur la détermination des paramètres {a$_1$,a$_2$,a$_3$}. D'autres fonctions de discrétisation peuvent être employées avec d'autres paramètres.

L'heuristique consiste en un algorithme de recherche basé sur l'évaluation de l'erreur de discrétisation entre la position finale du véhicule dans un environnement donné déterminée en fonction des objets discrétisés et la position finale du véhicule dans un environnement donné déterminée en fonction des objets non discrétisés.

[Math.10]
$$\varepsilon = \left| D\big(x_{init}, d(Obj_1), d(Obj_2), ..., d(Obj_n)\big) - D(x_{init}, Obj_1, Obj_2, ..., Obj_n) \right|$$

En d'autres termes, l'écart entre la position finale issue d'un environnement discrétisé $D(x_{init}, d(Obj_1), d(Obj_2), ..., d(Obj_n))$ et la position finale issue d'un environnement exact représenté sans perte $D(x_{init}, Obj_1, Obj_2, ..., Obj_n)$ résulte en une incertitude $\varepsilon$ sur la position finale.

Cette incertitude $\varepsilon$ est employée comme critère de l'heuristique pour déterminer le jeu de paramètres {a$_1$,..,a$_n$}.

L'heuristique est alors combinée à une méthode d'échantillonnage au niveau d'une scène à N objets permettant de choisir le jeu de paramètres {a$_1$,..,a$_n$} parmi un ensemble de jeux de paramètres préalablement déterminés. Les jeux de paramètres ne satisfaisant pas l'équation [Math.8] sont écartés. L'échantillonnage est ensuite reproduit sur plusieurs scènes jusqu'à convergence vers un jeu de paramètres.

Pour atteindre le but d'une solution quasi-optimale, on propose des étapes d'un procédé de contrôle de détermination des paramètres de la fonction de discrétisation basées sur une heuristique et sur un échantillonnage, illustré par la figure 3.

Au cours d'une première étape 11, on sélectionne une scène comprenant au moins un objet en fonction de la position initiale du véhicule parmi un ensemble de scènes.

Au cours d'une deuxième étape 12, on initialise le jeu de paramètres pour la fonction de discrétisation dans l'équation [Math.9] à partir d'un jeu de paramètres choisi aléatoirement parmi un ensemble prédéterminé de jeux de paramètres.

Au cours d'une troisième étape 13, on détermine l'erreur de discrétisation $\varepsilon$ égale à l'écart entre la position finale du véhicule dans la scène obtenue par application de la fonction de conduite aux vecteurs d'état discrétisés des objets et la position finale du véhicule dans la scène obtenue par application de la fonction de conduite aux vecteurs d'état exacts représentés sans perte des objets que décrit l'équation [Math. 10].

Au cours d'une quatrième étape 14, on compare l'erreur de discrétisation $\varepsilon$ obtenue à l'erreur maximale admissible $\varepsilon_{max}$. Si l'erreur de discrétisation $\varepsilon$ est supérieure à l'erreur maximale admissible $\varepsilon_{max}$, on retire le jeu de paramètres de l'ensemble de jeux de paramètres, et le procédé reprend à la deuxième étape 12.

Si l'erreur de discrétisation $\varepsilon$ est inférieure ou égale à l'erreur maximale admissible $\varepsilon_{max}$, on mémorise le jeu de paramètres $\{a_1,..,a_n\}$ testé et on valide la scène.

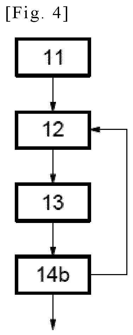

Une autre approche est basée sur un gradient de descente plutôt que sur un échantillonnage et est illustrée par la figure 4.

Les trois premières étapes 11 à 13 sont similaires à l'approche précédente.

Au cours d'une première étape 11, on sélectionne une scène comprenant au moins un objet en fonction de la position initiale du véhicule parmi un ensemble de scènes prédéterminées.

Au cours d'une deuxième étape 12, on initialise le jeu de paramètres pour la fonction de discrétisation dans l'équation [Math.9].

Au cours d'une troisième étape 13, on détermine l'erreur de discrétisation $\varepsilon$ égale à l'écart entre la position finale dans la scène pour des positions des objets discrétisées et la position finale dans la scène pour des positions des objets exacts représentés sans perte que décrit à l'équation [Math. 10].

Au cours d'une quatrième étape 14b, on compare l'erreur de discrétisation $\varepsilon$ obtenue à l'erreur maximale admissible $\varepsilon_{max}$. Si l'erreur de discrétisation $\varepsilon$ est inférieure ou égale à l'erreur maximale admissible $\varepsilon_{max}$, on mémorise le jeu de paramètres $\{a_1,..,a_n\}$ et on valide la scène.

Si l'erreur de discrétisation $\varepsilon$ est supérieure à l'erreur maximale admissible $\varepsilon_{max}$, le procédé reprend à la deuxième étape 12.

Si l'erreur de discrétisation $\varepsilon$ est inférieure ou égale à l'erreur maximale admissible $\varepsilon_{max}$, on mémorise le jeu de paramètres $\{a_1,..,a_n\}$ testé et on valide la scène.

Dans toute l'étape 14b, on utilise une mise à jour alpha du jeu de paramètres $\{a_1,..,a_n\}$, également appelée taux d'apprentissage, fonction du gradient d'erreur déterminé. En d'autres termes, on détermine un nouveau jeu de paramètres, basé sur le jeu de paramètres initial et modifié par un coefficient dépendant du taux d'évolution de l'erreur de discrétisation. Ainsi, à la différence de la première approche, on fait évoluer le jeu de paramètres progressivement au fur et à mesure des scènes permettant de pondérer la contribution d'une scène par rapport au autres dans l'évolution du jeu de paramètres.

Dans les deux approches, de nouvelles scènes sont choisies jusqu'à ce qu'un critère d'arrêt soit atteint. Un tel critère peut être borné par un nombre d'itérations. Pour réaliser cela, on emploie un compteur de convergence permettant de compter les itérations des étapes sur des scènes différentes d'obtenir un jeu de paramètres présentant une erreur de discrétisation la plus faible possible. Un autre critère peut être une mesure de la convergence, par exemple mesurer l'évolution de la mise à jour du jeu de paramètres. Aucune évolution de ces paramètres pour certain nombre d'itérations prouve leur stabilisation et peut constituer une condition d'arrêt.

Une autre méthode implique l'utilisation d'une fonction de discrétisation sous la forme d'un réseau neuronal dont les entrées sont les objets ($Obj_1$, ..., $Obj_n$) et les sorties sont les paramètres du jeu de paramètres $\{a_1,...,a_n\}$

On emploie une fonction de coût pour réaliser une régression basée sur l'erreur déterminée par l'équation [Math.10] pour déterminer le jeu de paramètres à conserver.

**Revendications**

1. Procédé de contrôle d'un véhicule autonome pour la détermination de la position finale du véhicule autonome dans un environnement comprenant au moins un objet en fonction de la position initiale du véhicule, comprenant les étapes suivantes :

   - on détermine un vecteur d'état par objet de l'environnement comprenant au moins une valeur acquise par le véhicule autonome en fonction des mesures réalisées par au moins un capteur du véhicule autonome,
   - on détermine des vecteurs d'état discrétisés par application d'une fonction de discrétisation à chaque vecteur d'état, la fonction de discrétisation étant définie par un jeu de paramètres déterminés de façon préalable,
   - on détermine le déplacement du véhicule autonome de la position initiale du véhicule à une position finale par application d'une fonction de conduite aux vecteurs d'état discrétisés des objets de l'environnement, et
   - on contrôle le véhicule autonome pour qu'il atteigne la position finale par le déplacement déterminé,

   ledit procédé étant **caractérisé en ce que** l'on détermine le jeu de paramètres de la fonction de discrétisation de façon préalable à son utilisation en appliquant les règles suivantes, itérativement jusqu'à ce qu'un critère d'arrêt soit atteint :

- on sélectionne (11) une scène comprenant au moins un objet en fonction de la position initiale du véhicule parmi un ensemble de scènes,
- on initialise (12) la fonction de discrétisation avec un jeu de paramètres choisi aléatoirement dans un ensemble prédéterminé de jeux de paramètres,
- on détermine (13) l'erreur de discrétisation égale à l'écart entre la position finale du véhicule dans la scène obtenue par application de la fonction de conduite aux vecteurs d'état discrétisés des objets et la position finale du véhicule dans la scène obtenue par application de la fonction de conduite aux vecteurs d'état exacts représentés sans perte des objets,
- on compare (14) l'erreur de discrétisation obtenue à une erreur maximale admissible prédéterminée,
- si l'erreur de discrétisation est supérieure à l'erreur maximale admissible, on retire le jeu de paramètres testé de l'ensemble de jeux de paramètres et le procédé reprend à l'étape d'initialisation du jeu de paramètres avec un nouveau jeu de paramètres,
- si l'erreur de discrétisation est inférieure ou égale à l'erreur maximale admissible, on mémorise le jeu de paramètres, on retire la scène de l'ensemble de scènes et on reprend le procédé à l'étape de sélection d'une scène,

ou en appliquant les règles suivantes :

- on sélectionne (11) une scène comprenant au moins un objet en fonction de la position initiale du véhicule parmi un ensemble de scènes,
- on initialise (12) la fonction de discrétisation avec un jeu de paramètres prédéterminé,
- on détermine (13) l'erreur de discrétisation égale à l'écart entre la position finale du véhicule dans la scène obtenue par application de la fonction de conduite aux vecteurs d'état discrétisés des objets et la position finale du véhicule dans la scène obtenue par application de la fonction de conduite aux vecteurs d'état exacts représentés sans perte des objets,
- on compare (14b) l'erreur de discrétisation obtenue à une erreur maximale admissible prédéterminée,
- si l'erreur de discrétisation est supérieure à l'erreur maximale admissible, on détermine un nouveau jeu de paramètres issu du jeu de paramètres test et d'un coefficient dépendant du taux d'évolution de l'erreur de discrétisation, et le procédé reprend à l'étape d'initialisation du jeu de paramètres avec le nouveau jeu de paramètres déterminé,
- si l'erreur de discrétisation est inférieure ou égale à l'erreur maximale admissible, on mémorise le jeu de paramètres,
- on retire la scène de l'ensemble de scènes et on reprend le procédé à l'étape de sélection d'une scène.

2. Procédé selon l'une quelconque des revendications précédentes, dans lequel un objet est choisi parmi une infrastructure, un bâtiment, une voie de circulation, un piéton, ou un véhicule, et chaque objet étant statique ou en mouvement.

3. Procédé selon l'une quelconque des revendications précédentes, dans lequel un vecteur d'état comprend au moins un parmi la distance de l'objet au véhicule, la vitesse relative de l'objet par rapport au véhicule, le poids, le niveau de confiance, ou une combinaison de plusieurs variables.

4. Procédé selon l'une quelconque des revendications précédentes, dans lequel la fonction de discrétisation est une fonction quadratique.

**Patentansprüche**

1. Verfahren zur Steuerung eines autonomen Fahrzeugs zur Bestimmung der Endposition des autonomen Fahrzeugs in einer Umgebung, die mindestens ein Objekt beinhaltet, in Abhängigkeit von der Ausgangsposition des Fahrzeugs, beinhaltend die folgenden Schritte:

- Bestimmen eines Zustandsvektors pro Objekt der Umgebung, der mindestens einen Wert beinhaltet, der durch das autonome Fahrzeug in Abhängigkeit von den Messungen, die durch mindestens einen Sensor des autonomen Fahrzeugs durchgeführt werden, erfasst wird,
- Bestimmen von diskretisierten Zustandsvektoren durch Anwendung einer Diskretisierungsfunktion auf jeden Zustandsvektor, wobei die Diskretisierungsfunktion durch einen Satz von im Vorfeld bestimmten Parametern definiert wird,

- Bestimmen der Bewegung des autonomen Fahrzeugs von der Ausgangsposition des Fahrzeugs in eine Endposition durch Anwendung einer Fahrfunktion auf die diskretisierten Zustandsvektoren der Objekte der Umgebung und
- Steuern des autonomen Fahrzeugs, damit es die Endposition durch die bestimmte Bewegung erreicht,

wobei das Verfahren **dadurch gekennzeichnet ist, dass** der Parametersatz der Diskretisierungsfunktion im Vorfeld seiner Verwendung bestimmt wird, indem die folgenden Regeln iterativ angewendet werden, bis ein Stoppkriterium erreicht wird:

- Auswählen (11) einer Szene, die mindestens ein Objekt beinhaltet, in Abhängigkeit von der Ausgangsposition des Fahrzeugs, aus einer Menge von Szenen,
- Initialisieren (12) der Diskretisierungsfunktion mit einem Parametersatz, der aus einer vorbestimmten Menge von Parametersätzen zufällig ausgewählt wird,
- Bestimmen (13) des Diskretisierungsfehlers, der gleich der Abweichung zwischen der Endposition des Fahrzeugs in der Szene, die durch Anwendung der Fahrfunktion auf die diskretisierten Zustandsvektoren der Objekte erhalten wird, und der Endposition des Fahrzeugs in der Szene, die durch Anwendung der Fahrfunktion auf die exakten, verlustfrei dargestellten Zustandsvektoren der Objekte erhalten wird, ist,
- Vergleichen (14) des erhaltenen Diskretisierungsfehlers mit einem vorbestimmten maximal zulässigen Fehler,
- wenn der Diskretisierungsfehler größer als der maximal zulässige Fehler ist, Entfernen des getesteten Parametersatzes aus der Menge von Parametersätzen, und Wiederaufnahme des Verfahrens bei dem Schritt des Initialisierens des Parametersatzes mit einem neuen Parametersatz,
- wenn der Diskretisierungsfehler kleiner als oder gleich dem maximal zulässigen Fehler ist, Speichern des Parametersatzes, Entfernen der Szene aus der Menge von Szenen und Wiederaufnehmen des Verfahrens bei dem Schritt des Auswählens einer Szene,

oder indem die folgenden Regeln angewendet werden:

- Auswählen (11) einer Szene, die mindestens ein Objekt beinhaltet, in Abhängigkeit von der Ausgangsposition des Fahrzeugs, aus einer Menge von Szenen,
- Initialisieren (12) der Diskretisierungsfunktion mit einem vorbestimmten Parametersatz,
- Bestimmen (13) des Diskretisierungsfehlers, der gleich der Abweichung zwischen der Endposition des Fahrzeugs in der Szene, die durch Anwendung der Fahrfunktion auf die diskretisierten Zustandsvektoren der Objekte erhalten wird, und der Endposition des Fahrzeugs in der Szene, die durch Anwendung der Fahrfunktion auf die exakten, verlustfrei dargestellten Zustandsvektoren der Objekte erhalten wird, ist,
- Vergleichen (14b) des erhaltenen Diskretisierungsfehlers mit einem vorbestimmten maximal zulässigen Fehler,
- wenn der Diskretisierungsfehler größer als der maximal zulässige Fehler ist, Bestimmen eines neuen Parametersatzes, der aus dem Testparametersatz und einem Koeffizienten, der von der Entwicklungsgeschwindigkeit des Diskretisierungsfehlers abhängt, hervorgeht, und Wiederaufnahme des Verfahrens bei dem Schritt des Initialisierens des Parametersatzes mit dem neuen bestimmten Parametersatz,
- wenn der Diskretisierungsfehler kleiner als oder gleich dem maximal zulässigen Fehler ist, Speichern des Parametersatzes,
- Entfernen der Szene aus der Menge von Szenen und Wiederaufnehmen des Verfahrens bei dem Schritt des Auswählens einer Szene.

2. Verfahren nach einem der vorhergehenden Ansprüche, wobei ein Objekt aus einer Infrastruktur, einem Gebäude, einer Fahrbahn, einem Fußgänger oder einem Fahrzeug ausgewählt wird und jedes Objekt statisch oder in Bewegung ist.

3. Verfahren nach einem der vorhergehenden Ansprüche, wobei ein Zustandsvektor mindestens eines von dem Abstand des Objekts zum Fahrzeug, der relativen Geschwindigkeit des Objekts in Bezug auf das Fahrzeug, dem Gewicht, dem Konfidenzniveau oder einer Kombination aus mehreren Variablen beinhaltet.

4. Verfahren nach einem der vorhergehenden Ansprüche, wobei die Diskretisierungsfunktion eine quadratische Funktion ist.

**Claims**

1. Method of control of an autonomous vehicle for determining the final position of the autonomous vehicle in a world model comprising at least one object depending on the initial position of the vehicle, comprising the following steps:

   - one state vector is determined per object of the world model, each state vector containing at least one value acquired by the autonomous vehicle in light of measurements made by at least one sensor of the autonomous vehicle,
   - discretized state vectors are determined by applying a discretization function to each state vector, the discretization function being defined by a set of previously determined parameters,
   - the movement of the autonomous vehicle from the initial position of the vehicle to a final position is determined by applying a driving function to the discretized state vectors of the objects of the world model, and
   - the autonomous vehicle is controlled so that it reaches the final position via the determined movement, said method being **characterized in that** the set of parameters of the discretization function is determined prior to its use by applying the following rules iteratively until a stop criterion is met:
   - a scene comprising at least one object is selected (11) depending on the initial position of the vehicle from a set of scenes,
   - the discretization function is initialized (12) with a set of parameters randomly selected from a predetermined set of sets of parameters,
   - the discretization error is determined (13), the discretization error being equal to the difference between the final position of the vehicle in the scene obtained by applying the driving function to the discretized state vectors of the objects and the final position of the vehicle in the scene obtained by applying the driving function to the exact state vectors represented without loss of the objects,
   - the obtained discretization error is compared (14) with a predetermined acceptable maximum error,
   - if the discretization error is greater than the acceptable maximum error, the tested set of parameters is removed from the set of sets of parameters and the method proceeds with the step of initializing the set of parameters with a new set of parameters,
   - if the discretization error is less than or equal to the acceptable maximum error, the set of parameters is stored in memory, the scene is removed from the set of scenes and the method proceeds with the step of selecting a scene,

   or by applying the following rules:

   - a scene comprising at least one object is selected (11) depending on the initial position of the vehicle from a set of scenes,
   - the discretization function is initialized (12) with a predetermined set of parameters,
   - the discretization error is determined (13), the discretization error being equal to the difference between the final position of the vehicle in the scene obtained by applying the driving function to the discretized state vectors of the objects and the final position of the vehicle in the scene obtained by applying the driving function to the exact state vectors represented without loss of the objects,
   - the obtained discretization error is compared (14b) with a predetermined acceptable maximum error,
   - if the discretization error is greater than the acceptable maximum error, a new set of parameters is determined from the test set of parameters and from a coefficient dependent on the rate of change of the discretization error, and the method proceeds with the step of initializing the set of parameters with the determined new set of parameters,
   - if the discretization error is less than or equal to the acceptable maximum error, the set of parameters is stored in memory,
   - the scene is removed from the set of scenes and the method proceeds with the step of selecting a scene.

2. Method according to any one of the preceding claims, wherein an object is selected from a piece of infrastructure, a building, a traffic lane, a pedestrian, or a vehicle, and each object is static or moving.

3. Method according to either of the preceding claims, wherein a state vector comprises at least one among the distance of the object to the vehicle, the relative speed of the object with respect to the vehicle, weight, confidence level, or a combination of a plurality of variables.

4. Method according to any of the preceding claims, wherein the discretization function is a quadratic function.

[Fig. 1]

| 1 | → | 2 | → | 3 | → | 4 | → | 5 | → | 6 |

[Fig. 2]

[Fig. 3]

[Fig. 4]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2019072965 A1

**Littérature non-brevet citée dans la description**

- **LIKHACHEV, M.** ; **FERGUSON, D.** Planning long dynamically feasible maneuvers for autonomous vehicles. *The International Journal of Robotics Research*, 2009, vol. 28 (8), 933-945